Europäisches Patentamt

European Patent Office

Office européen des brevets

(11) Veröffentlichungsnummer: **0 385 319**
**A1**

## (12) EUROPÄISCHE PATENTANMELDUNG

(21) Anmeldenummer: **90103612.9**

(22) Anmeldetag: **24.02.90**

(51) Int. Cl.5 **H02M 3/335**

(30) Priorität: **02.03.89 DE 3906600**

(43) Veröffentlichungstag der Anmeldung:
**05.09.90 Patentblatt 90/36**

(84) Benannte Vertragsstaaten:
**AT BE CH DE DK ES FR GB GR IT LI LU NL SE**

(71) Anmelder: **Vogt electronic Aktiengesellschaft**
**Erlautal 7**
**D-8391 Erlau/Passau(DE)**

(72) Erfinder: **Hartmann, Uwe, Ing.-grad.**
**Passauer Strasse 49**
**D-8391 Untergriesbach(DE)**
Erfinder: **Mai, Udo, Ing.-grad.**
**O.-Berneder Ring 7**
**D-8391 Untergriesbach(DE)**

(74) Vertreter: **Hieke, Kurt**
**Stadlerstrasse 3**
**D-8013 Haar bei München(DE)**

(54) **Schaltnetzteil.**

(57) Gegenstand der Erfindung ist ein Schaltnetzteil für hohe Leistungen, das einen Schaltnetztransformator TI mit einer Primär-Hauptwicklung $WI_1$, einer primärseitigen Treiberwikklung $WI_2$ und einer Sekundärwicklung $WI_3$ zum Speisen einer geregelten Spannungsschiene (Spannung $U_s$) aufweist und das mit einem mit der Primär-Hauptwicklung $WI_1$ in Serie liegenden elektronischen Schalter 2 versehen ist, der die an die Primär-Hauptwicklung $WI_1$ angelegte Gleichspannung mit hoher Frequenz unterbricht. Erfindungsgemäß ist mindestens ein weiterer Schaltnetztransformator TII vorgesehen, der ebenfalls eine Primär-Hauptwicklung $WII_1$ und eine die geregelte Spannungsschiene speisende Sekundärwicklung $WII_3$ aufweist. Die Primär-Hauptwicklungen einerseits und die Sekundärwikklungen zur Speisung der geregelten Spannungsschiene andererseits sind zueinander parallel geschaltet. Durch die Verwendung zweier gesonderter Schaltnetztransformatoren TI und TII werden gegenüber den bekannten Schaltnetzteilen, die nur einen einzigen Schaltnetztransformator aufweisen, erhebliche Vorteile in herstellungstechnischer und funktioneller Hinsicht erreicht.

## Schaltnetzteil

Die Erfindung bezieht sich auf ein Schaltnetzteil gemäß dem Oberbegriff des Patentanspruchs 1.

Schaltnetzteile dieser Art sind aus der Praxis bekannt und werden verbreitet für die Versorgung von elektronischen Geräten, z.B. Fernsehempfängern, Computern oder dgl., mit den benötigten Spannungen verwendet, da sie gegenüber der Stromversorgung mit 50 Hz eine Reihe von Vorteilen aufweisen. Für diese Schaltnetzteile werden im allgemeinen Transformatoren, sogenannte Schaltnetztransformatoren, mit vorzugsweise Ferritkernen eingesetzt. Bei den bekannten Schaltnetzteilen muß der - einzige - Schaltnetztransformator sich widersprechende Bedingungen erfüllen, die mit steigender Frequenz im schlechter erfüllbar sind.

So soll die Kopplung zwischen den Wicklungen des Schaltnetztransformators möglichst hundertprozentig sein, die gegenseitige Beeinflussung der Sekundärspannungen durch Lastwechsel möglichst gering, und dabei eine sichere Netztrennung nach VDE gewährleistet werden.

Dies erreichte man bisher durch sehr komplizierte Lagenwikklungen, die wegen der engen Kopplung ineinander verschachtelt werden mußten.

Es ist offensichtlich, daß derartige Schaltnetztransformato ren nur manuell zu fertigen sind, womit das Restrisiko steigt, daß die VDE-Besimmungen nicht eingehalten werden.

Weiterhin ist es bei derartigen Schaltnetzteilen notwendig, die Sekundärspannungen von evtl. weiteren Sekundärwicklungen noch durch Längsregler zu stabilisieren, da sich diese Sekundärspannungen mit sich ändernder Last (z.B. NF-Lautstärke) ebenfalls ändern. Hierdurch sinkt der Gesamtwirkungsgrad erheblich.

In vielen Fällen ist es erwünscht, mit einer möglichst hohen Schaltfrequenz zu arbeiten. Mit steigender Frequenz treten noch zusätzliche Effekte auf, die von dem bei den bekannten Schaltnetzteilen vorgesehenen einzigen Schaltnetztransformator nur schlecht beherrscht werden können, wie z.B. der sogenannte Skineffekt, der Mehrdrahtoder Litzenwicklungen erforderlich macht. Außerdem verringert sich die Anzahl der Windungen pro Volt, d.h. es sind Sekundärspannungen unter einer gewissen Höhe nicht darstellbar, da die kleinstmögliche Windungszahl "1" beträgt.

Der Erfindung liegt die Aufgabe zugrunde, ein Schaltnetzteil gemäß dem Oberbegriff des Patentanspruchs 1 zu schatfen, bei dem die den bekannten Schaltnetzteile dieser Art anhaftenden, oben geschilderten Nachteile vermieden sind.

Die vorstehende Aufgabe wird durch die im Patentanspruch 1 genannten Merkmale gelöst.

Bei dem erfindungsgemäßen Schaltnetzteil sind anstelle des einzigen Schaltnetztransformators bei den bekannten Schaltnetzteilen zwei (oder mehrere) kleinere Einzel-Schaltnetztransformatoren vorgesehen, und durch diese Aufteilung ergeben sich folgende Vorteile:

1) Primärseitig wird zum Erreichen der notwendigen Gesamt induktivität eine höhere Windungszahl pro Einzel-Schaltnetztranformator (bei zwei Einzel-Schaltnetztransformatoren z.B. > das 1,4-fache , weil der Einzel-Schaltnetztransformator einen kleineren magnetischen Querschnitt aufweist) erforderlich, was sich günstig auf die Gesamtkopplung auswirkt und damit auch die Streuinduktivität und den Skineffekt herabsetzt. Durch die Aufteilung der Ströme auf zwei (oder mehrere) Einzel-Schaltnetztransformatoren kann der Drahtdurchmesser entsprechend verkleinert werden. Ebenso wird die Kühlung durch die Aufteilung verbessert.

2) Das unter 1) Gesagte trifft im Prinzip auch auf evtl. weitere Sekundärwicklungen zu, die zusätzlich zu den die geregelte Spannungsschiene speisenden Sekundärwicklungen eingesetzt werden, wenn außer der stabilisierten Spannung der geregelten Spannungsschiene noch andere Spannungen benötigt werden. Hinzu kommt, daß diese weiteren Sekundärwicklungen je nach erforderlicher Spannung und ggf. den Gegebenheiten eines besonderen Transformatortyps auf die mehreren Schaltnetztransformatoren aufgeteilt und die Teilwicklungen parallel oder in Reihe geschaltet werden können. Um eine Änderung der Spannungen durch eine variierende Niederfrequenzbelastung zu minimieren, besteht auch die Möglichkeit, die betreffende weitere Sekundärwicklung nur auf einem der Schaltnetztransformatoren anzuordnen, womit die Rückwirkung auf den zweiten bzw. die weiteren Schaltnetztransformatoren stark vermindert ist. Diese Rückwirkung kann zusätzlich durch eine antiserielle Wicklung auf dem jeweils anderen Transformator bzw. den jeweils anderen Transformatoren noch weiter vermindert werden, was ein ganz wesentlicher Vorteil der Erfindung ist.

3) Längsregler zur Stabilisierung der Sekundärspannung sind somit nicht mehr erforderlich, der Gesamtwirkungs grad der Stromversorgung steigt.

4) Die Einzel-Schaltnetztransformatoren der genannten Art für Schaltnetzteile gemäß der Erfindung sind ohne Schwierigkeiten vollautomatisch zu fertigen, was das Sicherheitsrisiko fast gänzlich ausschaltet. Damit steigt, trotz Verwendung von mindestens zwei Einzel-Schaltnetztransformatoren, die Wirtschaftlichkeit, denn zwei automatisch gefertigte kleinere Transformatoren sind billiger herzustellen als ein handgefertigter großer.

5) Der wünschenswerten Erhöhung der Schaltfrequenz sind wesentlich weitere Grenzen gesetzt.

Die Unteransprüche haben bevorzugte Ausführungsformen des Schaltnetzteils gemäß Patentanspruch 1 zum Gegenstand.

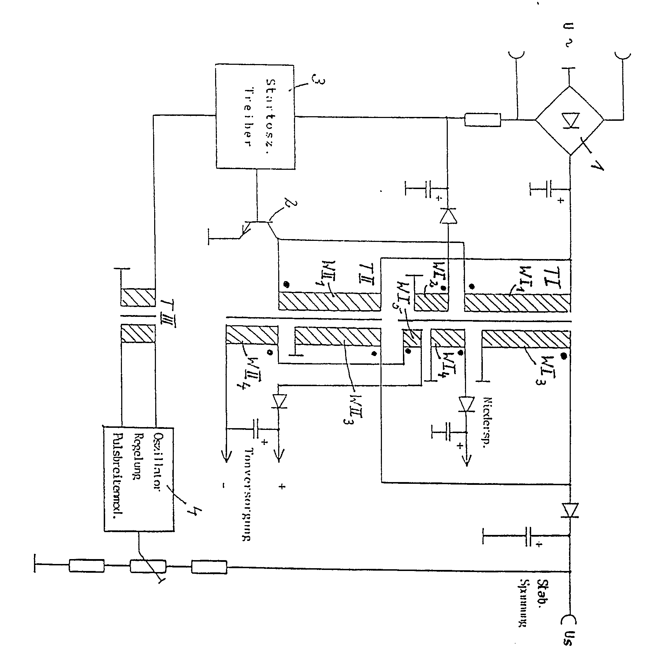

Die Zeichnung zeigt als Beispiel das Schaltbild einer bevorzugten Ausführungsform eines erfindungsgemäßen Schaltnetzteils für Sichtgeräte.

Die in der Zeichnung dargestellte Schaltung weist zwei gesonderte Schaltnetztransformatoren TI und TII auf, von denen jeder mit einer Primär-Hauptwicklung $WI_1$ bzw. $WII_1$ und mit einer sogenannten Systemspannungs-Sekundärwicklung $WI_3$ bzw. $WII_3$ versehen ist. Die Primär-Hauptwicklungen $WI_1$ und $WII_1$ sind ebenso wie die Systemspannungs-Sekundärwicklungen $WI_3$ und $WII_3$ zueinander parallel geschaltet. Die Parallelschaltung aus den Primär-Hauptwicklungen $WI_1$ und $WII_1$ liegt in Reihe mit einem elektronischen Schalter 2 hier in Form eines Transistors, der die mittels einer Gleichrichteranordnung 1 aus dem Netz erzeugte, die Primär-Hauptwicklungen $WI_1$ und $WII_1$ beaufschlagende Gleichspannung mit einer Frequenz von mindestens 16 kHz unterbricht. Die Systemspannungs-Sekundärwicklungen $WI_3$ und $WII_3$ speisen eine geregelte Spannungs schiene, die eine stabilisierte Spannung $U_s$ als Systemspannung liefert. Außer den beiden vorgenannten Wicklungen weist der Schaltnetztransformator TI primärseitig noch eine Treiberwicklung $WI_2$ und eine weitere Sekundärwicklung $WI_4$ auf, die eine im Sichtgerät benötigte Niederspannung liefert.

Der weitere Schaltnetztransformator TII ist außer mit den beiden vorgenannten Wicklungen mit einer weiteren Sekundärwicklung $WII_4$ versehen, die die Tonversorgungsspannung für den Audio-Teil des Sichtgerätes liefert. Dieser Audio-Teil stellt aufgrund der variablen Lautstärke eine variierende Niederfrequenzbelastung für die weitere Sekundärwicklung $WII_4$ des weiteren Schaltnetztransformators TII dar, die noch eine gewisse Rückwirkung auf den Schaltnetztransformator TI haben kann, obzwar diese Rückwirkung gegenüber den bekannten Schaltnetzteilen mit einem einzigen Schaltnetztransformator, auf dem alle benötigten Wicklungen angeordnet sind, durch die Anordnung auf einem von dem Schaltnetztransformator T1 gesonderten weiteren Schaltnetztransformator TII bereits erheblich gemindert ist. Um auch diese restliche Rückwirkung auf den Schaltnetztransformator TI praktisch zu eleminieren, ist mit der weiteren Sekundärwicklung $WII_4$ des weiteren Schaltnetztransformators TII gegensinig eine Kompensationswicklung $WI_5$ in Reihe geschaltet, die auf dem Schaltnetztransformator TI angeordnet ist.

Die Spannungsregelung und die Steuerung des elektronischen Schalters II besorgen eine in der Zeichnung als Block dargestellte Starteinrichtung 3 und eine über einen Triggertrafo TIII an die Starteinrichtung 3 angekoppelte, als Block dargestellte Schaltungsanordnung 4. Die Starteinrichtung 3 besteht aus einem Oszillator und einer Treiberstufe und wird zunächst über die Gleichrichteranordnung 1 und einen Widerstand R1 nach dem Einschalten gespeist, bis nach kurzer Zeit die Versorgung durch die Treiberwicklung $WI_2$ erfolgt. Nach Errei chen von etwa 80% der Versorgungsspannung startet die Schaltungsanordnung 4. Sie übernimmt über den Triggertrafo TIII die Ansteuerung des elektronischen Schalters 2 über den Treiber in der Starteinrichtung 3, wodurch die Spannung $U_s$ im Normalbetrieb konstant gehalten wird.

## Ansprüche

1. Schaltnetzteil für hohe Leistungen, z.B. für Fernsehempfänger mit hoher NF-Leistung, der einen Schaltnetztransformator (TI) mit einer Primär-Hauptwicklung ($WI_1$), einer primärseitigen Treiberwicklung ($WI_2$) und einer Sekundärwicklung ($WI_3$) zum Speisen einer geregelten Spannungsschiene (Spannung $U_s$) aufweist und der mit einem mit der Primär-Hauptwicklung ($WI_1$) in Serie liegenden elektronischen Schalter (2) für hohe Frequenzen, insbesondere 16 kHz, zum periodischen Unterbre-. chen der an die Primär-Hauptwicklung ($WI_1$) angelegten, mittels einer Gleichrichteranordnung (1) aus dem Netz erzeugten Gleichspannung versehen ist, dadurch gekennzeichnet, daß mindestens ein weiterer Schaltnetztransformator (TII) mit einer Primär-Hauptwicklung ($WII_1$) und einer Sekundärwicklung ($WII_3$) zur Speisung der geregelten Spannungsschiene vorgesehen ist, wobei zum einen alle Primär-Hauptwicklungen ($WI_1$, $WII_1$) und zum anderen alle die geregelte Spannungsschiene speisenden Sekundärwicklungen ($WI_3$, $WII_3$) zueinander parallel geschaltet sind.

2. Schaltnetzteil gemäß Anspruch 1, **dadurch gekennzeichnet**, daß wenigstens ein Schaltnetztransformator (TI, TII) zusätzlich zu seiner die geregelte Spannungsschiene speisenden Sekundärwicklung ($WI_3$ bzw,. $WII_3$) eine weitere Sekundärwicklung ($WI_4$ bzw. $WII_4$) aufweist.

3. Schaltnetzteil nach Anspruch 2, **dadurch gekennzeichnet**, daß von den weiteren Sekundärwicklungen wenigstens einige, jeweils zu unterschiedlichen Schaltnetztransformatoren gehörende parallel oder gleichsinnig in Reihe geschaltet sind.

4. Schaltnetzteil nach Anspruch 2 oder 3, **dadurch gekennzeichnet**, daß die Schaltnetztransformatoren (TI, TII) unterschiedliche, nicht galvanisch mit einer anderen weiteren Sekundärwicklung verbundene weitere Sekundärwicklungen ($WI_4$ bzw.

WII₄) aufweisen.

5. Schaltnetzteil nach einem oder mehreren der Ansprüche 2 bis 4, **dadurch gekennzeichnet**, daß zur Kompensation von durch Lastwechsel an einer weiteren Sekundärwicklung (WII₄) eines Schaltnetztransformators (TII) hervorgerufenen Spannungsschwankungen die anderen Schaltnetztransformatoren (TI) jeweils mit einer gegensinnig zu dieser einen weiteren Sekundärwicklung (WII₄) in Reihe geschalteten Kompensationswicklung (WI₅) versehen sind.

6. Schaltnetzteil nach einem oder mehreren der vorhergehenden Ansprüche, **dadurch gekennzeichnet**, daß wenigstens zwei Schaltnetztransformatoren jeweils eine Treiberwikklung auweisen.

7. Schaltnetzteil nach Anspruch 6, **dadurch gekennzeichnet**, daß von den Treiberwicklungen wenigstens einige in Reihe geschaltet sind.

8. Schaltnetzteil nach Anspruch 6 oder 7, **dadurch gerkennzeichnet**, daß von den Treiberwicklungen wenigstens einige parallel geschaltet sind.

9. Schaltnetzteil nach einem oder mehreren der vorhergehenden Ansprüche, **dadurch gekennzeichnet**, daß die Schaltnetztransformatoren unterschiedliche mechanische Größen und unterschiedliche Primär- und/oder Sekundärinduktivitäten insbesondere ihrer Haupt-Primärwicklungen (WI₁,- WII₁) bzw. ihrer die geregelte Spannungsschiene speisenden Sekundärwicklungen (WI₃, WII₃) aufweisen.

Europäisches
Patentamt

**EUROPÄISCHER RECHERCHENBERICHT**

Nummer der Anmeldung

EP 90103612.9

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int. Cl.⁵) |
|---|---|---|---|
| X | EP - A1 - 0 157 729 (SIEMENS) <br> * Zusammenfassung; Seite 5, Zeilen 10-32; Seite 6, Zeilen 8-21; Anspruch 1; Fig. 1 * <br> -- | 1 | H 02 M 3/335 |
| A | US - A - 4 809 151 (OTA) <br> * Zusammenfassung; Spalte 2, Zeile 62 - Spalte 4, Zeile 25; Anspruch 1; Fig. 1 * <br> -- | 1,2,4 | |
| A | GB - A - 2 172 155 (THOMSON-BRANDT) <br> * Zusammenfassung; Seite 2, Zeilen 22-52; Fig. 1 * <br> -- | 1,2,4 | |
| A | EP - A1 - 0 224 705 (THOMSON-BRANDT) <br> * Zusammenfassung; Spalte 3, Zeilen 25-27; Fig. 1 * <br> ---- | 1 | |

RECHERCHIERTE SACHGEBIETE (Int. Cl.⁵)

H 02 M
H 04 N

Der vorliegende Recherchenbericht wurde für alle Patentansprüche erstellt

| Recherchenort | Abschlußdatum der Recherche | Prüfer |
|---|---|---|
| WIEN | 24-04-1990 | BRUNNER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument